# EUROPEAN PATENT APPLICATION

(11) **EP 4 769 817 A1**
(43) Date of publication of application: **01.07.2026**
(21) Application number: 25857301.3
(22) Date of filing: 14.08.2025
(51) Int. Cl.: H01M 50/538, H01M 50/533, H01M 50/536, H01M 10/0587, H01M 10/0525, H01M 50/531, H01M 10/058, B23K 26/21, B23K 20/10

(54) **SECONDARY BATTERY AND METHOD FOR MANUFACTURING SAME**

(30) Priority: 19.08.2024 KR 20240110338; 23.09.2024 KR 20240128403; 12.08.2025 KR 20250111827
(71) Applicant: LG ENERGY SOLUTION, LTD., Seoul 07335 (KR)
(72) Inventor: DO, Jin Uk, Daejeon 34122 (KR); LEE, Hyun Hee, Daejeon 34122 (KR)
(74) Representative: Goddar, Heinz J.
(86) International application number: PCT/KR2025/012328
(87) International publication number: WO 2026/043212

(57) **Abstract**

The present disclosure relates to a current collector, a secondary battery including the same and a manufacturing method thereof. The current collector according to the present disclosure includes a first current collecting portion, a second current collecting portion, and a connection portion. The first current collecting portion may be welded to a plurality of first electrode tabs. The second current collecting portion may be electrically connected to the first current collecting portion, and may be welded to a plurality of second electrode tabs. The connection portion may have one end to which the first current collecting portion is connected and the other end to which the second current collecting portion is connected, and may include a current collecting protrusion. The current collecting protrusion may be made of a different material from the connection portion.

## Description

### TECHNICAL FIELD

The present disclosure relates to a secondary battery and a manufacturing method thereof.

### BACKGROUND

In recent years, research on high-performance secondary batteries capable of being repeatedly charged/discharged has been actively conducted because the demand for portable electronic devices is rapidly increasing, and the development of electric vehicles, energy storage batteries, robots, satellites, and the like, has begun in earnest.

Secondary batteries may be manufactured in various forms according to the shape of the battery case, and may be classified into, for example, can-type secondary batteries in which an electrode assembly is housed in a metal can, and pouch-type secondary batteries in which an electrode assembly is housed in a pouch of an aluminum laminate sheet. The can-type secondary batteries may be classified into cylindrical secondary batteries and prismatic secondary batteries depending on the shape of the metal can.

In the secondary battery, an electrode tab of an electrode assembly and a current collector are connected through welding. The current collector is connected to an electrode terminal, and the electrode assembly and the electrode terminal are electrically connected due to the connection between the current collector and the electrode terminal.

### SUMMARY

### TECHNICAL PROBLEM

The present disclosure provides a current collector, a secondary battery including the same, and a manufacturing method thereof, in which sufficient welding strength can be secured between an electrode terminal and a current collector when the electrode terminal and the current collector are connected.

The present disclosure provides a current collector, a secondary battery including the same, and a manufacturing method thereof, in which the current collector and the electrode terminal can be easily coupled.

### TECHNICAL SOLUTION

The secondary battery according to one embodiment of the present disclosure includes an electrode assembly and a current collector. The electrode assembly may include an electrode portion, and a plurality of first electrode tabs and a plurality of second electrode tabs formed at one end of the electrode portion. The current collector may be disposed on the top of the electrode portion, and may include a first current collecting portion, a second current collecting portion, and a connection portion. The first current collecting portion may be welded to the plurality of first electrode tabs. The second current collecting portion may be welded to the plurality of second electrode tabs. The connection portion may be arranged between the first current collecting portion and the second current collecting portion, and may include a current collecting protrusion. The first electrode tabs may be bent toward the first current collecting portion in one direction, and welded, and the second electrode tabs may be bent toward the second current collecting portion in a direction opposite to the first electrode tabs and welded.

In the secondary battery according to one embodiment of the present disclosure, the current collecting protrusion may be made of a different material from the connection portion.

In the secondary battery according to one embodiment of the present disclosure, the current collector may further include a supporting member at the lower end of the current collecting protrusion.

In the secondary battery according to one embodiment of the present disclosure, the first current collecting portion may extend vertically from the lower side of one side of the connection portion, and the second current collecting portion may extend vertically from the upper side of the other side of the connection portion.

In the secondary battery according to one embodiment of the present disclosure, the connection portion of the current collector may be made of Cu or Ni, and the current collecting protrusion may be made of Al. The connection portion and the current collecting protrusion may be coupled by cold jointing.

In the secondary battery according to one embodiment of the present disclosure, the connection portion of the current collector may be made of Cu or Ni, and the supporting member may be made of Al. The connection portion and the supporting member may be coupled by cold jointing.

In the secondary battery according to one embodiment of the present disclosure, the current collector may be disposed at one end of the electrode portion, in a portion where the first electrode tabs and the second electrode tabs are not formed.

In the secondary battery according to one embodiment of the present disclosure, an insulating member may be disposed on the lower surface of the current collector.

In the secondary battery according to one embodiment of the present disclosure, the thickness of the current collector may be about 0.5 mm to 3.0 mm.

In the secondary battery according to one embodiment of the present disclosure, a plurality of fine grooves or a plurality of fine irregularities may be formed on the top surface of the current collector.

In the secondary battery according to one embodiment of the present disclosure, the electrode portion may include first electrode members on which the first electrode tabs are formed at a first location, and second electrode members on which the second electrode tabs are formed at a second location. The first electrode members and the second electrode members may have the same polarity.

A secondary battery manufacturing method according to one embodiment of the present disclosure includes a preparation step, a current collector arrangement step, a bending step, and a welding step. In the preparation step, an electrode assembly may be prepared, and the electrode assembly includes an electrode portion, and a plurality of first electrode tabs and a plurality of second electrode tabs formed at one end of the electrode portion. In the current collector arrangement step, a current collector may be disposed at one end of the electrode portion, in a portion where the first electrode tabs and the second electrode tabs are not formed. In the bending step, the first electrode tabs may be bent toward the top surface of a first current collecting portion of the current collector in one direction, and the second electrode tabs may be bent toward the top surface of a second current collecting portion of the current collector in a direction opposite to the first electrode tabs. In the welding step, the bent first electrode tabs and the bent second electrode tabs may be welded to the current collector. The current collector may include the first current collecting portion, the second current collecting portion, and a connection portion. The first current collecting portion may be welded to the first electrode tabs. The second current collecting portion may be electrically connected to the first current collecting portion, and may be welded to the second electrode tabs. The connection portion may have one end to which the first current collecting portion is connected and the other end to which the second current collecting portion is connected, and may include a current collecting protrusion.

In the secondary battery manufacturing method according to one embodiment of the present disclosure, the current collecting protrusion may be made of a different material from the connection portion.

In the secondary battery manufacturing method according to one embodiment of the present disclosure, the current collector may further include a supporting member at the lower end of the current collecting protrusion.

In the secondary battery manufacturing method according to one embodiment of the present disclosure, the first current collecting portion may extend vertically from the lower side of one side of the connection portion, and the second current collecting portion may extend vertically from the upper side of the other side of the connection portion.

In the secondary battery manufacturing method according to one embodiment of the present disclosure, the connection portion may be made of Cu or Ni, and the current collecting protrusion may be made of Al. The connection portion and the current collecting protrusion may be coupled by cold jointing.

In the secondary battery manufacturing method according to one embodiment of the present disclosure, the connection portion may be made of Cu or Ni, and the supporting member may be made of Al. The connection portion and the supporting member may be coupled by cold jointing.

In the secondary battery manufacturing method according to one embodiment of the present disclosure, an insulating member may be disposed on the lower surface of the current collector.

In the secondary battery manufacturing method according to one embodiment of the present disclosure, the thickness of the current collector may be about 0.5 mm to 3.0 mm.

In the secondary battery manufacturing method according to one embodiment of the present disclosure, a plurality of fine grooves or a plurality of fine irregularities may be formed on the top surface of the current collector.

### EFFECTS OF THE INVENTION

In the current collector according to an embodiment of the present disclosure, the secondary battery including the same, and the manufacturing method thereof, sufficient welding strength can be secured between the electrode terminal and the current collector when the electrode terminal and the current collector are connected.

In the current collector according to an embodiment of the present disclosure, the secondary battery including the same, and the manufacturing method thereof, the current collector and the electrode terminal can be easily coupled.

### BRIEF DESCRIPTION OF THE DRAWINGS

The drawings attached herewith are merely illustrative of embodiments of the present disclosure, and take on the role of further facilitating the understanding of the technical idea of the present disclosure along with the descriptions herein. Thus, the present disclosure should not be construed as being limited to those illustrated in the drawings.
FIG. 1 is a view illustrating a secondary battery according to one embodiment of the present disclosure.
FIG. 2 is a view illustrating the secondary battery according to one embodiment of the present disclosure.
FIG. 3 is a view illustrating an electrode assembly having a plurality of first and second electrode tabs formed on an electrode portion in the secondary battery according to one embodiment of the present disclosure.
FIGS. 4A and 4B are views illustrating a first electrode member and a second electrode member in the secondary battery according to one embodiment of the present disclosure.
FIGS. 5A and 5B are views illustrating a third electrode member and a fourth electrode member in the secondary battery according to one embodiment of the present disclosure.
FIG. 6 is a view illustrating a current collector in the secondary battery according to one embodiment of the present disclosure.
FIGS. 7A and 7B are views illustrating the current collector in the secondary battery according to one embodiment of the present disclosure.
FIGS. 8A and 8B are views illustrating the current collector in the secondary battery according to another embodiment of the present disclosure.
FIGS. 9A and 9B are views illustrating the current collector in the secondary battery according to another embodiment of the present disclosure.
FIGS. 10A and 10B are views illustrating the current collector in the secondary battery according to another embodiment of the present disclosure.
FIGS. 11A to 11C are views illustrating an insulating member disposed under the current collector in the secondary battery according to one embodiment of the present disclosure.
FIG. 12 is a flow chart illustrating a manufacturing method of the secondary battery according to one embodiment of the present disclosure.
FIG. 13 is a view illustrating a state where the first electrode tabs are grouped and the second electrode tabs are grouped in the secondary battery according to one embodiment of the present disclosure.
FIGS. 14A and 14B are views illustrating a state where the current collector is disposed at one end of the electrode portion, and is welded to the first electrode tabs and the second electrode tabs in the secondary battery according to one embodiment of the present disclosure.
FIG. 15 is a view illustrating a welding progress direction during welding of the current collector and the first electrode tabs in the secondary battery according to one embodiment of the present disclosure.
FIG. 16 is a view illustrating a state where the current collector and the first and second electrode tabs are welded in the secondary battery according to one embodiment of the present disclosure.
FIG. 17 is a view illustrating a state where a cover member is disposed on a portion where the current collector and the first electrode tabs are welded in the secondary battery according to one embodiment of the present disclosure.
FIG. 18 is a view illustrating a state where a cover member is disposed on a portion where the current collector and the first and second electrode tabs are welded in the secondary battery according to another embodiment of the present disclosure.
FIG. 19 is a view illustrating a state where a cap assembly is coupled to the electrode assembly in the secondary battery according to one embodiment of the present disclosure.

Corresponding reference characters indicate corresponding components throughout the several views of the drawings, but different reference characters may be given as necessary. The drawing figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

### EMBODIMENTS OF THE INVENTION

The present disclosure may be subjected to various modifications and have various embodiments, and then, some embodiments will be illustrated and described in detail in the detailed description. However, it should be understood that this is not intended to limit the present disclosure to specific embodiments, but includes all modifications, equivalents and substitutes falling within the spirit and technical scope of the present disclosure.

The terms used in the present disclosure are used only to describe specific embodiments, and are not intended to limit this disclosure. The singular expression includes the plural expression unless the context clearly indicates otherwise. In the present disclosure, it should be understood that terms such as 'include' or 'have' are intended to indicate the presence of features, numbers, steps, operations, components, parts or combinations thereof described in the specification, but do not exclude the possibility of the presence or addition of one or more other features, numbers, steps, operations, components, parts or combinations thereof, in advance.

Hereinafter, some embodiments of the present disclosure will be described in detail with reference to the accompanying drawings. Here, it should be noted that in the accompanying drawings, the same components are represented by the same reference numerals wherever possible. Also, detailed descriptions of known functions and configurations that may obscure the gist of the present disclosure will be omitted. For the same reason, some components are exaggerated, omitted, or schematically illustrated in the accompanying drawings.

In the case of an anode terminal of a secondary battery, the exposed portion of a terminal structure is made of an Al-based metal, and a current collector is made of a copper or nickel metal. Thus, there is a problem in that the welding bonding force is weakened during a welding process between dissimilar metals.

The present disclosure provides a secondary battery structure capable of securing a sufficient welding strength between an electrode terminal and a current collector, and solving complexity of connection with the electrode terminal.

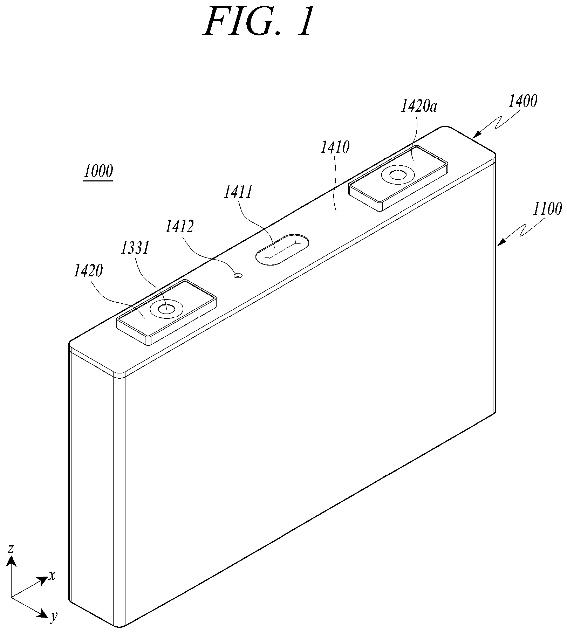

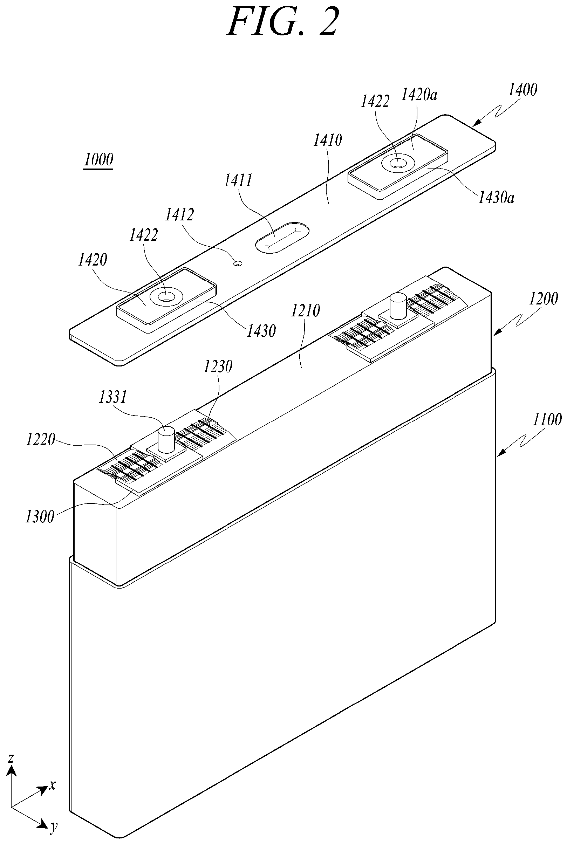

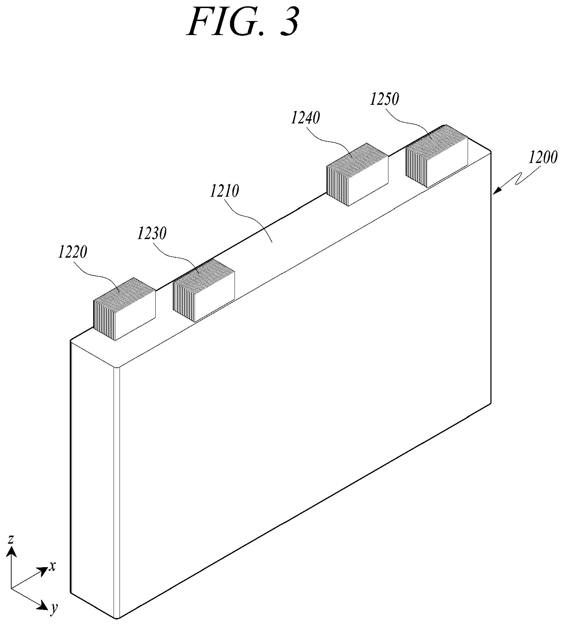

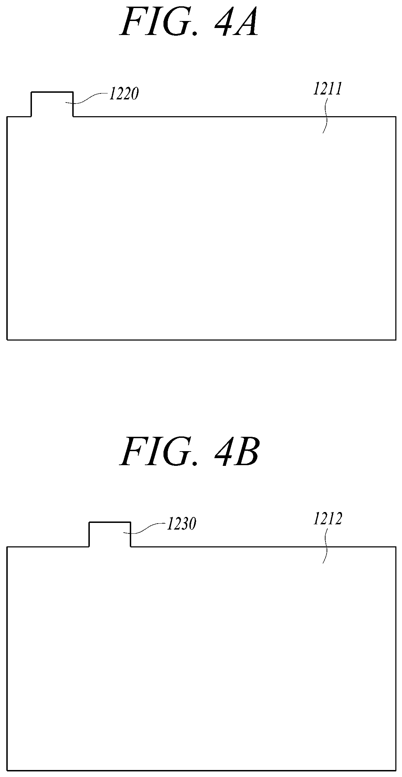

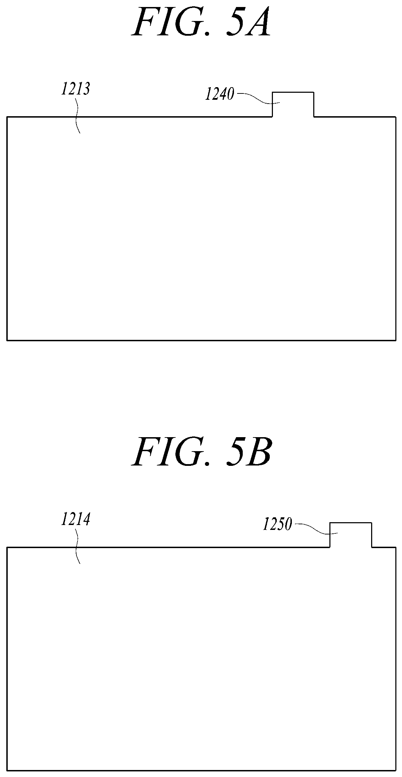

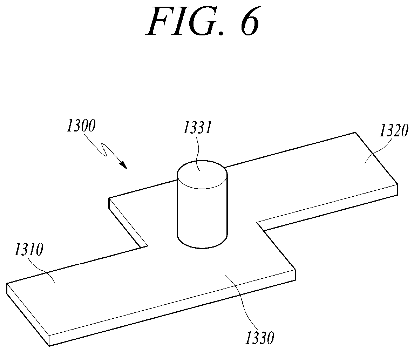

FIG. 1 is a view illustrating a secondary battery according to one embodiment of the present disclosure, FIG. 2 is a view illustrating a partially disassembled state of the secondary battery according to one embodiment of the present disclosure, FIG. 3 is a view illustrating an electrode assembly having a plurality of first and second electrode tabs formed on an electrode portion in the secondary battery according to one embodiment of the present disclosure, FIGS. 4A and 4B are views illustrating a first electrode member and a second electrode member in the secondary battery according to one embodiment of the present disclosure, FIGS. 5A and 5B are views illustrating a third electrode member and a fourth electrode member in the secondary battery according to one embodiment of the present disclosure, and FIG. 6 is a view illustrating a current collector in the secondary battery according to one embodiment of the present disclosure.

As illustrated in FIG. 1 and FIG. 2, a secondary battery 1000 according to one embodiment of the present disclosure includes a case 1100, an electrode assembly 1200, a current collector 1300, and a cap assembly 1400.

The case 1100 forms the exterior of the secondary battery 1000. In the case 1100, a space for accommodating the electrode assembly 1200 may be formed, and an opening may be formed on one surface of the case 1100. In the present embodiment, the case 1100 has a rectangular parallelepiped shape, but is not limited thereto and can be modified in various ways. The case 1100 may be made of a sturdy material capable of protecting the electrode assembly 1200 accommodated therein. For example, the case 1100 may be made of a metal such as aluminum or stainless steel.

An electrolyte may be accommodated together with the electrode assembly 1200 inside the case 1100. The electrolyte may include a lithium salt such as LiPF₆ or LiBF₄ in an organic solvent such as EC, PC, DEC, EMC, or DMC. The electrolyte may be in the form of liquid, solid, or gel.

The electrode assembly 1200 is accommodated within the case 1100. As illustrated in FIG. 3, the electrode assembly 1200 includes an electrode portion 1210, a plurality of first electrode tabs 1220, a plurality of second electrode tabs 1230, a plurality of third electrode tabs 1240 and a plurality of fourth electrode tabs 1250. The plurality of first electrode tabs 1220, and the plurality of second electrode tabs 1230 are arranged at one end of the electrode portion 1210. The first electrode tabs 1220 are aligned with the first electrode tabs 1220, and the second electrode tabs 1230 are aligned with the second electrode tabs 1230. The first electrode tabs 1220, and the second electrode tabs 1230, which are separately aligned, are disposed such that they do not overlap in the width direction (y direction) and the length direction (x direction) of the electrode assembly 1200. The plurality of third electrode tabs 1240, and the plurality of fourth electrode tabs 1250 are arranged at the other end of the electrode portion 1210. The third electrode tabs 1240 are aligned with the third electrode tabs 1240, and the fourth electrode tabs 1250 are aligned with the fourth electrode tabs 1250. The third electrode tabs 1240, and the fourth electrode tabs 1250, which are separately aligned, are disposed such that they do not overlap in the width direction (y direction) and the length direction (x direction) of the electrode assembly 1200.

In terms of the electrode portion 1210 of the electrode assembly 1200, the electrode portion 1210 includes a plurality of first electrode members 1211, a plurality of second electrode members 1212, a plurality of third electrode members 1213, a plurality of fourth electrode members 1214, and separators.

An active material may be applied to each of the first electrode members 1211, the second electrode members 1212, the third electrode members 1213, and the fourth electrode members 1214. A cathode active material such as a transition metal oxide may be applied to a metal plate such as aluminum, in the first electrode members 1211, and the second electrode members 1212. The first electrode members 1211, and the second electrode members 1212 may have the same polarity, and may be cathode plates. An anode active material such as graphite or carbon may be applied to a metal plate such as copper or nickel, in the third electrode members 1213 and the fourth electrode members 1214. The third electrode members 1213, and the fourth electrode members 1214 may have the same polarity, and may be anode plates.

Separators are located between the first to fourth electrode members 1211, 1212, 1213, and 1214 to prevent a short circuit between the first to fourth electrode members 1211, 1212, 1213, and 1214. The material of the separator may be, for example, polyethylene, polypropylene, or a composite material thereof.

The electrode portion 1210 of the electrode assembly 1200 may be formed by positioning separators between the sequentially disposed first and third electrode members 1211 and 1213, and between the sequentially disposed second and fourth electrode members 1212 and 1214. In the electrode portion 1210 of one embodiment, one side of the electrode portion 1210 is formed by stacking the first electrode member 1211, the separator, the third electrode member 1213, and the separator tens to hundreds of times in this order, and the other side of the electrode portion 1210 is formed by stacking the second electrode member 1212, the separator, the fourth electrode member 1214, and the separator tens to hundreds of times in this order. In another embodiment, the electrode portion 1210 may be formed by stacking and winding the first electrode member 1211, the separator, the third electrode member 1213, the separator, the second electrode member 1212, the separator, the fourth electrode member 1214, and the separator in this order.

In the present embodiment, the electrode assembly 1200 includes one electrode portion 1210, but in another embodiment, the electrode assembly 1200 may include a plurality of electrode portions 1210. The electrode portions 1210 may be electrically connected to each other.

Electrode tabs 1220, 1230, 1240, and 1250, to which active materials are not applied, are formed at one ends of the first to fourth electrode members 1211, 1212, 1213, and 1214. In one embodiment, the electrode member 1211, 1212, 1213, and 1214 and the electrode tab 1220, 1230, 1240, and 1250 may be integrally formed through a method in which the electrode member 1211, 1212, 1213, and 1214 and the electrode tab 1220, 1230, 1240, and 1250 remain by cutting away a predetermined portion from one metal plate using laser, and the like. The electrode tabs 1220, 1230, 1240, and 1250 may be formed in a direction toward the cap assembly 1400.

The first electrode tab 1220 is formed at the first location of the first electrode member 1211. The second electrode tab 1230 is formed at the second location of the second electrode member 1212 (FIGS. 4A and 4B). Similarly, the third electrode tab 1240 may be formed at the third location of the third electrode member 1213, and the fourth electrode tab 1250 may be formed at the fourth location of the fourth electrode member 1214 (FIGS. 5A and 5B).

The first electrode members 1211 and the third electrode members 1213 may be alternately stacked with separators therebetween. The stack of the plurality of first electrode members 1211 and the plurality of third electrode members 1213 forms one half of the electrode portion 1210.

The second electrode members 1212 and the fourth electrode members 1214 may be alternately stacked with separators therebetween. The stack of the plurality of second electrode members 1212 and the plurality of fourth electrode members 1214 forms the other half of the electrode portion 1210.

The stack of the first electrode members 1211 and the third electrode members 1213 and the stack of the second electrode members 1212 and the fourth electrode members 1214 are connected in the width direction of the electrode portion 1210. In forming the electrode assembly 1200, according to one embodiment, after the first electrode members 1211 and the third electrode members 1213 are stacked, the second electrode members 1212 and the fourth electrode members 1214 may be stacked.

When the first to fourth electrode members 1211, 1212, 1213, and 1214 formed as described above are stacked together with separators, the first electrode tabs 1220 overlap at the first location. The second electrode tabs 1230 overlap at the second location. Also, the third electrode tabs 1240 overlap at the third location, and the fourth electrode tabs 1250 overlap at the fourth location. For example, among the first electrode tabs 1220 and the second electrode tabs 1230 having the same polarity, the first electrode tabs 1220 are grouped at the first location, and the second electrode tabs 1230 are grouped at the second location. The first location and the second location may be spaced apart from each other on the electrode member, and the group of the first electrode tabs 1220 and the group of the second electrode tabs 1230 may be spaced apart in the width direction (y direction) and the length direction (x direction) of the electrode assembly 1200. Also, among the third electrode tabs 1240 and the fourth electrode tabs 1250 having the same polarity, the third electrode tabs 1240 are grouped at the third location, and the fourth electrode tabs 1250 are grouped at the fourth location. The third location and the fourth location may be spaced apart from each other on the electrode member, and the group of the third electrode tabs 1240 and the group of the fourth electrode tabs 1250 may be spaced apart in the width direction (y direction) and the length direction (x direction) of the electrode assembly 1200.

In order to stably weld a large number of electrode tabs 1220, 1230, 1240, and 1250, the electrode tabs having the same polarity are divided into two groups spaced apart from each other and are aligned, and then the groups are separately welded onto the current collector 1300. For example, although one electrode tab is formed on one electrode member, the electrode tabs are formed at different locations on separate electrode members. Thus, after the electrode members are stacked, two electrode tab groups at different locations are formed at the same polarity. In another embodiment, two or more electrode tab groups at different locations may also be formed at the same polarity.

The respective electrode tabs 1220, 1230, 1240, and 1250 overlapping at the locations may be separately connected to the current collectors through ultrasonic welding, laser welding, and the like, so as to facilitate the flow of current. The connection method is not limited to ultrasonic welding, laser welding, and the like, and any connection method capable of facilitating the flow of current is possible.

As illustrated in FIG. 6, the current collector 1300 includes a first current collecting portion 1310, a second current collecting portion 1320, a connection portion 1330, and a current collecting protrusion 1331.

According to one embodiment, the first electrode tabs 1220 are welded to the first current collecting portion 1310, and the second electrode tabs 1230 are welded to the second current collecting portion 1320.

The structure of the current collector 1300 will be described below.

The cap assembly 1400 seals the opening of the case 1100 in which the electrode assembly 1200 is accommodated. The cap assembly 1400 includes a cap plate 1410, and terminals 1420 and 1420a.

The cap plate 1410 of the cap assembly 1400 may have a plate shape covering the opening of the case 1100. The cap plate 1410 may have a shape corresponding to the shape of the opening of the case 1100. The cap plate 1410 may be made of the same material as the case 1100, and the cap plate 1410 may be fixed to the case 1100 through a method such as laser welding.

A vent hole 1411 and an electrolyte injection port 1412 may be formed in the cap plate 1410. The vent hole 1411 is opened when the internal pressure of the case 1100 exceeds a reference value. In the present embodiment, the vent hole 1411 is formed in the cap plate 1410, but in another embodiment, the vent hole 1411 may also be formed in the case 1100. Alternatively, if necessary, the vent hole 1411 may also be formed in both the case 1100 and the cap plate 1410. An electrolyte may be injected into the case 1100 through the electrolyte injection port 1412.

The terminals 1420 and 1420a may be formed to protrude from the cap plate 1410. The terminals 1420 and 1420a are electrically connected to the electrode tabs 1220 through the current collectors 1300. The terminals 1420 and 1420a may have a circular or rectangular plate shape.

Through holes 1422 may be formed in the terminals 1420 and 1420a of the cap assembly 1400. The current collecting protrusion 1331 is inserted into the through hole 1422. After the current collecting protrusion 1331 is inserted into the through hole 1422, the outer peripheral surface of the end of the current collecting protrusion 1331 and the inner peripheral surface of the end of the through hole 1422 may be coupled through butt welding.

Insulating members 1430 and 1430a may be located between the terminals 1420 and 1420a and the cap plate 1410 of the cap assembly 1400. The insulating members 1430 and 1430a insulate the terminals 1420 and 1420a from the cap plate 1410.

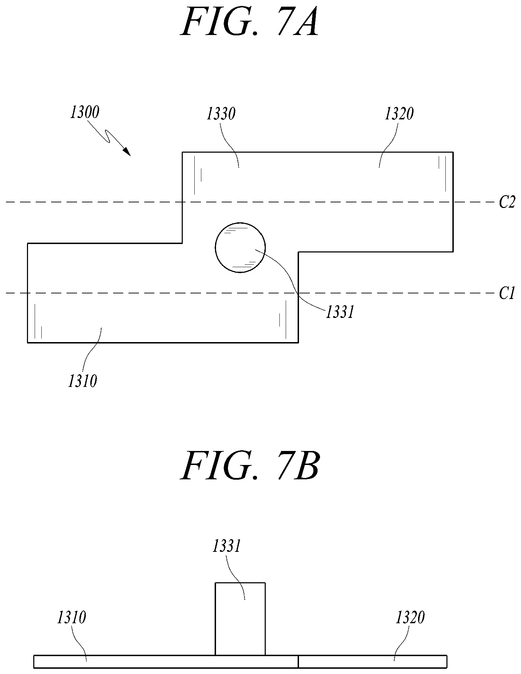

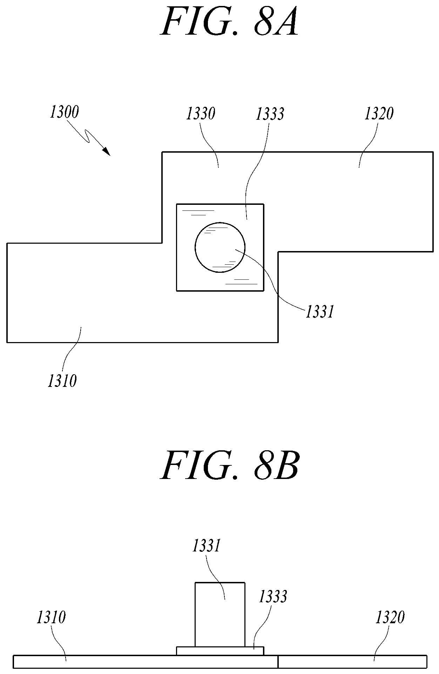

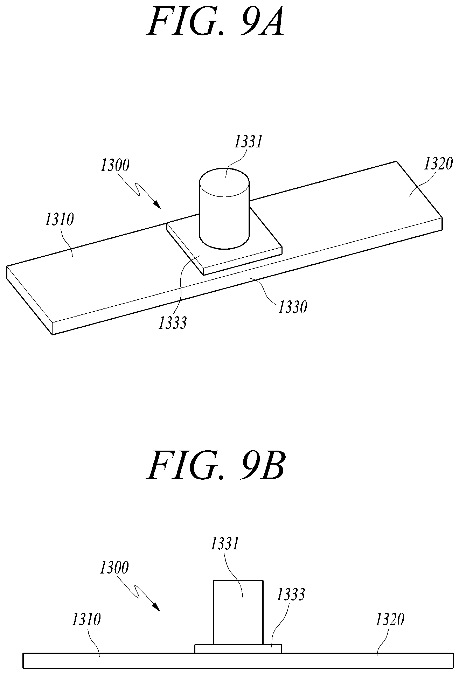

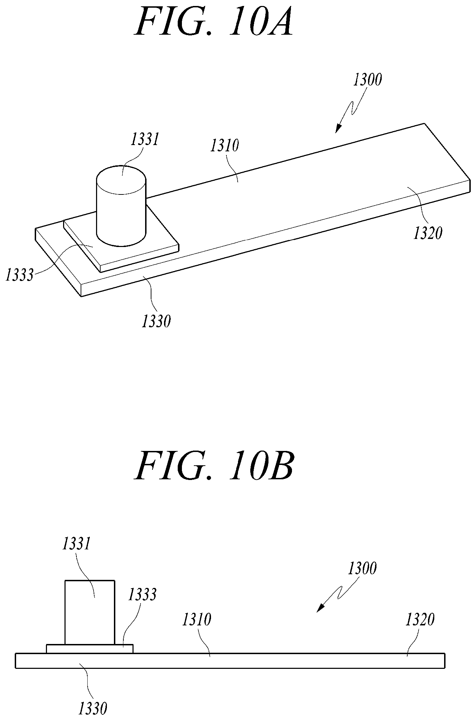

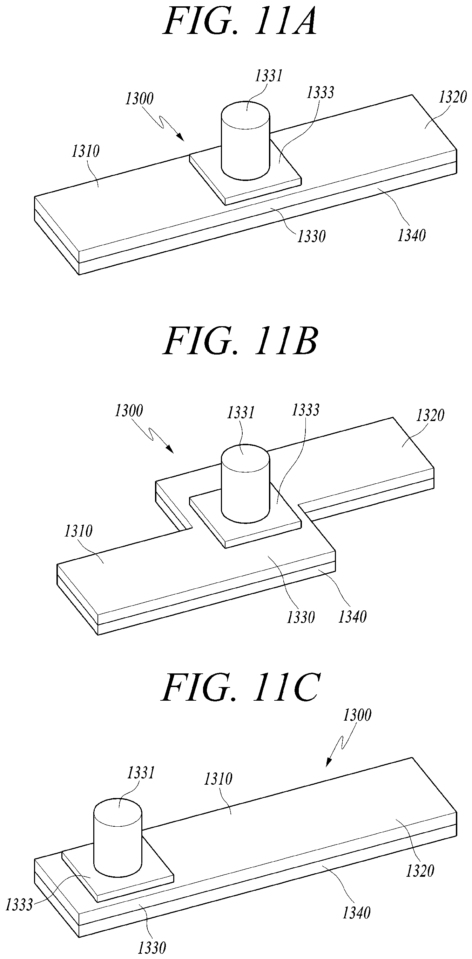

FIGS. 7A and 7B are views illustrating the current collector 1300 in the secondary battery according to one embodiment of the present disclosure, FIGS. 8A and 8B are views illustrating the current collector 1300 in the secondary battery according to another embodiment of the present disclosure, FIGS. 9A and 9B are views illustrating the current collector 1300 in the secondary battery according to another embodiment of the present disclosure, FIGS. 10A and 10B are views illustrating the current collector in the secondary battery according to another embodiment of the present disclosure, and FIGS. 11A to 11C are views illustrating an insulating member disposed under the current collector 1300 in the secondary battery according to one embodiment of the present disclosure.

As illustrated in FIGS. 7A and 7B, the current collector 1300 includes the first current collecting portion 1310, the second current collecting portion 1320, and the connection portion 1330.

According to one embodiment, the current collector 1300 has a 'Z' shape. In the current collector 1300, with the connection portion 1330 as a center, the first current collecting portion 1310, and the second current collecting portion 1320 are connected to and extend from both sides of the connection portion 1330, respectively. The first current collecting portion 1310 may be connected to the lower portion on one side of the connection portion 1330, and the second current collecting portion 1320 may be connected to the upper portion on the other side of the connection portion 1330. For example, the first current collecting portion 1310 and the second current collecting portion 1320 are arranged to be misaligned with each other in the length direction with the connection portion 1330 as a center. Due to the misaligned arrangement of the first current collecting portion 1310, and the second current collecting portion 1320, the shape in which the first current collecting portion 1310, the second current collecting portion 1320, and the connection portion 1330 are connected may be a stepwise or "Z" shape. The longitudinal center line C1 of the first current collecting portion 1310 and the longitudinal center line C2 of the second current collecting portion 1320 may be parallel to each other.

Since the first current collecting portion 1310 and the second current collecting portion 1320 of the current collector 1300 are spaced apart from each other in the length direction (y direction) and the width direction (x direction) of the electrode assembly 1200, the first current collecting portion 1310 is disposed adjacent to one side of the electrode assembly 1200 in the width direction, and the second current collecting portion 1320 is disposed adjacent to the other side of the electrode assembly 1200 in the width direction. Accordingly, when the first electrode tabs 1220 and the second electrode tabs 1230 are welded to the first current collecting portion 1310 and the second current collecting portion 1320, respectively, they do not interfere with each other.

According to one embodiment, the first current collecting portion 1310, the second current collecting portion 1320, and the connection portion 1330 are integrally formed and are made of the same material, and the first current collecting portion 1310, and the second current collecting portion 1320 are electrically connected. The width of the first current collecting portion 1310 and the second current collecting portion 1320 in the current collector 1300 may be about 0.3 times to 0.5 times the width of the electrode assembly 1200. Also, the current collector 1300 may have a thickness of about 0.5 mm to 3.0 mm. In the present disclosure, since the electrode tabs 1220, 1230, 1240, and 1250 are bent and welded to the current collectors 1300, the current collectors 1300 may be thickly formed.

The connection portion 1330 of the current collector 1300 includes the current collecting protrusion 1331. The current collecting protrusions 1331 are connected to the through holes of the electrode terminals 1420 and 1420a, so that the current collectors 1300 are electrically connected to the electrode terminals 1420 and 1420a.

In another embodiment, the connection portion 1330 may further include a supporting member 1333 at the lower end of the current collecting protrusion 1331. The supporting member 1333 is disposed so as to be in contact with the lower surface of the current collecting protrusion 1331, and is made of the same material as the current collecting protrusion 1331. The supporting member 1333 serves to stably couple the current collecting protrusion 1331 to the connection portion 1330.

A plurality of fine grooves or a plurality of fine irregularities may be formed on the top surface of the current collector 1300. The fine grooves and the fine irregularities are first melted during welding, thereby improving the fusion between the current collectors 1300 and the electrode tabs 1220, 1230, 1240, and 1250.

According to one embodiment, two current collectors 1300 may be provided. In order to electrically connect the electrode assembly 1200 to the electrode terminals 1420 and 1420a of the cap assembly 1400, each current collector 1300 may be made of the same material as the plurality of first and second electrode tabs 1220 and 1230, or may be made of the same material as the plurality of third and fourth electrode tabs 1240 and 1250. For example, the current collector 1300 may be made of aluminum, or made of copper or nickel.

The current collector 1300 connected to the cathode plates is made of an aluminum material. Thus, when the current collector 1300 is welded to the cathode terminal 1420 made of an aluminum material, sufficient welding strength may be ensured due to welding between the same type of materials. However, the current collector 1300 connected to the anode plates is made of a copper or nickel material. Thus, when the current collector 1300 is welded to the anode terminal 1420a made of an aluminum material, the bonding force is weakened. Therefore, in the present disclosure, by making the material of the anode terminal 1420a of the cap assembly 1400 and the material of the current collecting protrusion 1331 of the current collector 1300 the same, the welding strength is secured when the current collector 1300 and the anode terminal 1420a are connected.

Hereinafter, descriptions will be made on the current collector 1300 connected to the third and fourth electrode members 1213 and 1214, for example, the anode plates.

In order to electrically connect the electrode assembly 1200 to the anode terminal 1420a of the cap assembly 1400, the first and second current collecting portions 1310 and 1320, and the connection portion 1330 of the current collector 1300 are made of the same material as the plurality of third electrode tabs 1240 and the plurality of fourth electrode tabs 1250, for example, a Cu or Ni-based metal which is the same material as the anode plates. The current collecting protrusion 1331 of the current collector 1300 coupled to the anode terminal 1420a of the cap assembly 1400 is made of an Al-based metal which is the same material as the anode terminal 1420a. According to one embodiment, the current collecting protrusion 1331 of the current collector 1300 is made of a material different from that of the connection portion 1330.

According to one embodiment, the connection portion 1330 of the current collector 1300 and the current collecting protrusion 1331 are made of different types of metals, i.e., a Cu or Ni-based metal, and Al, respectively. The current collecting protrusion 1331 is bonded to the top surface of the connection portion 1330, through, for example, cold jointing. In the cold jointing, bonding materials are stretched due to a high force applied to metals, and then bonding is performed while the contact area is expanded and the actual contact surface is expanded. Electrical connection with a low contact resistance may be formed due to cold jointing which is material bonding within the actual contact surface.

When the current collecting protrusion 1331 is located at a groove formed on the connection portion 1330 of the current collector 1300 and is pressurized, bonding is performed while the contact surface between the inner surface of the groove and the end of the current collecting protrusion 1331 is expanded. In the present embodiment, the current collecting protrusion 1331 is directly bonded to the connection portion 1330, but in another embodiment, the supporting member 1333 disposed at the lower end of the current collecting protrusion 1331 may be coupled to the connection portion 1330.

As illustrated in FIGS. 8A and 8B, the current collecting protrusion 1331 may further include the supporting member 1333 at the lower end thereof, the supporting member 1333 being formed integrally with the current collecting protrusion 1331. The current collecting protrusion 1331 and the supporting member 1333 are integrally formed and may be made of the same metal material, e.g., Al. The supporting member 1333 is located at the groove formed on the connection portion 1330 made of the Cu material, and the top surface of the supporting member 1333 is pressed to perform bonding. As the contact area between the inner surface of the groove on the connection portion 1330 and the lower surface of the supporting member 1333 is increased, the supporting member 1333 is bonded to the connection portion 1330. When the supporting member 1333 is bonded to the connection portion 1330, different types of metals may come into contact with each other over a wider area than when the current collecting protrusion 1331 is bonded to the connection portion 1330. This enables sturdier and more stable bonding.

In the present embodiment, descriptions have been made on a case where the current collector 1300 has a 'Z' shape, as an example, but the present disclosure is not limited thereto. As illustrated in FIGS. 9A and 9B, even for the rectangular current collector 1300, the current collecting protrusion 1331 may be coupled to the connection portion 1330 in the same manner. The connection portion 1330 may be arranged between the first current collecting portion 1310 and the second current collecting portion 1320. The current collecting protrusion 1331 is pressed while the supporting member 1333 formed integrally with the current collecting protrusion 1331 at the lower end of the current collecting protrusion 1331 is placed on the connection portion 1330 of the current collector 1300. The lower surface of the supporting member 1333 may be fitted into the groove formed on the connection portion 1330, and the top surface of the supporting member 1333 is pressed to perform bonding. The supporting member 1333 is bonded to the connection portion 1330 while the contact area between the inner surface of the groove on the connection portion 1330 and the lower surface of the supporting member 1333 is increased. The case where the current collecting protrusion 1331 is directly connected to the connection portion 1330 is also not excluded.

Meanwhile, in another embodiment, the current collecting protrusion 1331 and the supporting member 1333 may also be connected to one side of the current collector 1300 (FIGS. 10A and 10B). For example, on the current collector 1300, the connection portion 1330, the first current collecting portion 1310, and the second current collecting portion 1320 may be sequentially arranged. The current collecting protrusion 1331 may be formed integrally with the supporting member 1333, and then pressurized while the lower surface of the supporting member 1333 is fitted into the groove formed on the connection portion 1330. The supporting member 1333 may be bonded to the connection portion 1330 while the contact area between the inner surface of the groove on the connection portion 1330 and the lower surface of the supporting member 1333 is increased.

When the current collector 1300 has a rectangular shape, the width of the first current collecting portion 1310 and the second current collecting portion 1320 may be about 0.5 times to 0.8 times the width of the electrode assembly 1200.

An insulating member 1340 may be disposed under the current collector 1300 (FIG. 10). The insulating member 1340 may be an insulating plate or an insulating film. The electrode tabs 1220 and 1230 and the electrode portion 1210 may be further protected by the insulating member 1340.

Referring back to FIG. 2, the current collector 1300 may be disposed at one end of the electrode portion 1210, in a portion where the first electrode tabs 1220 and the second electrode tabs 1230 are not formed. Since the plurality of first electrode tabs 1220 and the plurality of second electrode tabs 1230 are spaced apart in the length direction of the electrode assembly 1200, a region where no electrode tabs are formed is formed on one side of the plurality of first electrode tabs 1220 and the plurality of second electrode tabs 1230. The current collector 1300 is placed on this portion.

After the current collector 1300 is placed, the first electrode tabs 1220 are bent toward the first current collecting portion 1310, and the second electrode tabs 1230 are bent toward the second current collecting portion 1320. For example, the plurality of first electrode tabs 1220 and the plurality of second electrode tabs 1230 are bent in opposite directions.

After the first electrode tabs 1220 and the second electrode tabs 1230 are bent, welding is performed on the first electrode tabs 1220 and the second electrode tabs 1230. According to one embodiment, for the welding, a method such as ultrasonic welding or laser welding may be used.

During welding, on the first current collecting portion 1310 side of the current collector 1300, welding may be performed from the first electrode tabs 1220 toward the first current collecting portion 1310 side, while on the second current collecting portion 1320 side of the current collector 1300, welding may be performed from the second electrode tabs 1230 toward the second current collecting portion 1320 side. In the present disclosure, there is no risk of damaging the separators provided in the electrode portion because the electrode tabs are located on the current collector 1300 and welding is performed on the top of the electrode tabs.

Also, the current collector 1300 may be disposed at the other end of the electrode portion 1210, in a portion where the third electrode tabs 1240 and the fourth electrode tabs 1250 are not formed. Since the plurality of third electrode tabs 1240 and the plurality of fourth electrode tabs 1250 are spaced apart in the length direction of the electrode assembly 1200, a region where no electrode tabs are formed is formed on one side of the plurality of third electrode tabs 1240 and the plurality of fourth electrode tabs 1250. The current collector 1300 is placed on this portion.

After the current collector 1300 is placed, the third electrode tabs 1240 are bent toward the first current collecting portion 1310, and the fourth electrode tabs 1250 are bent toward the second current collecting portion 1320. For example, the plurality of third electrode tabs 1240 and the plurality of fourth electrode tabs 1250 are bent in opposite directions.

After the third electrode tabs 1240 and the fourth electrode tabs 1250 are bent, welding is performed on the third electrode tabs 1240 and the fourth electrode tabs 1250. According to one embodiment, for the welding, a method such as ultrasonic welding or laser welding may be used.

During welding, on the first current collecting portion 1310 side of the current collector 1300, welding may be performed from the third electrode tabs 1240 toward the first current collecting portion 1310 side, while on the second current collecting portion 1320 side of the current collector 1300, welding may be performed from the fourth electrode tabs 1250 toward the second current collecting portion 1320 side. In the present disclosure, there is no risk of damaging the separators provided in the electrode portion because the electrode tabs are located on the current collector 1300 and welding is performed on the top of the electrode tabs.

According to one embodiment of the present disclosure, when the welding of the current collector is performed on the top of the electrode tabs, the thickness of the current collector has to be thin in order to transfer heat to the electrode tabs on the lower side. This has led to reduction of durability. However, in the present disclosure, since the tabs are bent and welded to the current collector, the thickness of the current collector may be secured, and the tabs may be more efficiently welded to the current collector.

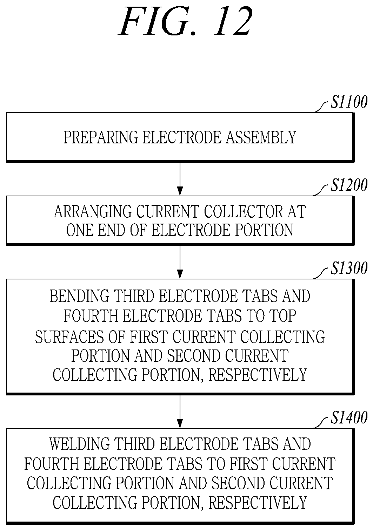

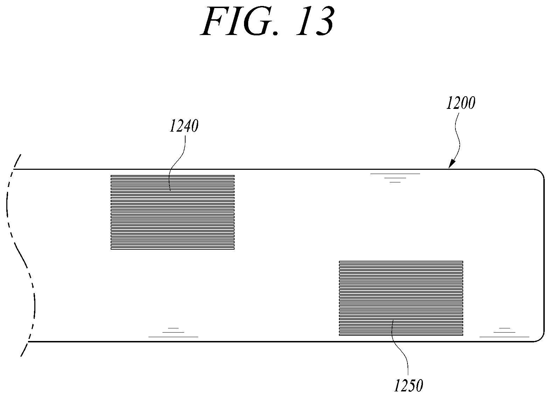

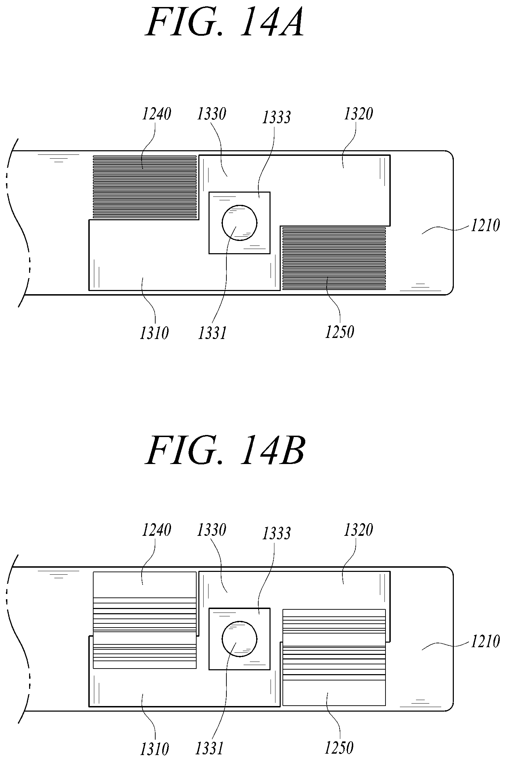

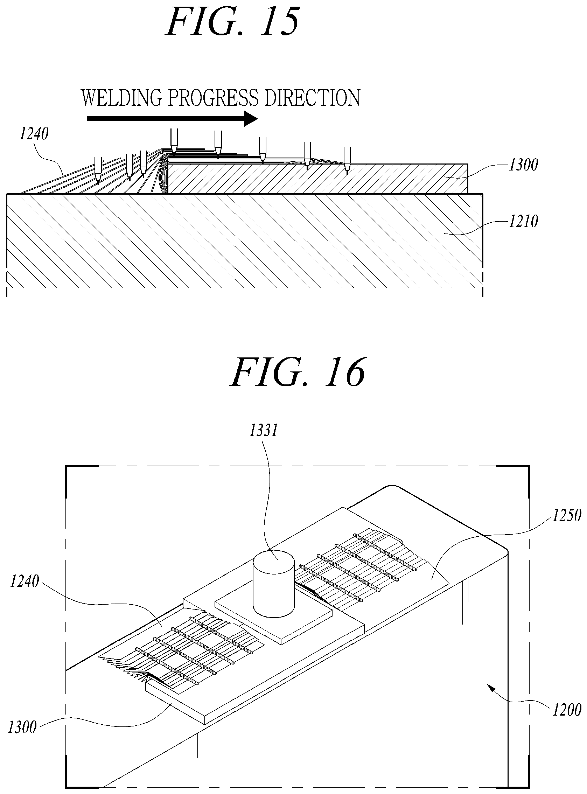

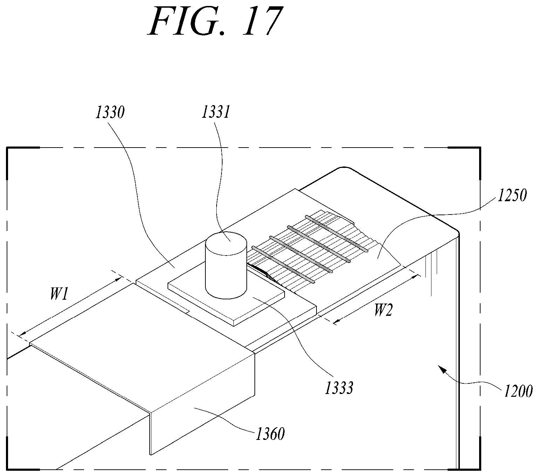

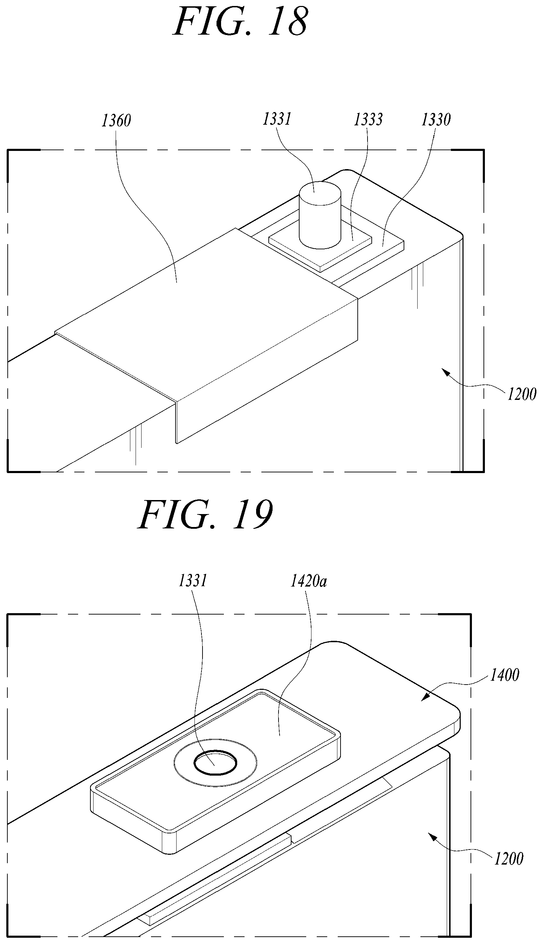

FIG. 12 is a flowchart illustrating a manufacturing method of the secondary battery according to one embodiment of the present disclosure, FIG. 13 is a view illustrating a state where the third electrode tabs 1240 are grouped and the fourth electrode tabs 1250 are grouped in the secondary battery according to one embodiment of the present disclosure, FIGS. 14A and 14B are views illustrating a state where the current collector 1300 is disposed at one end of the electrode portion, and is welded to the third electrode tabs 1240 and the fourth electrode tabs 1250 in the secondary battery according to one embodiment of the present disclosure, and FIG. 15 is a view illustrating a welding progress direction during welding of the current collector 1300 and the third electrode tabs 1240 in the secondary battery according to one embodiment of the present disclosure. FIG. 16 is a view illustrating a state where the current collector 1300 and the third and fourth electrode tabs 1240 and 1250 are welded in the secondary battery according to one embodiment of the present disclosure, FIG. 17 is a view illustrating a state where a cover member is disposed on the current collector in the secondary battery according to one embodiment of the present disclosure, FIG. 18 is a view illustrating a state where the cover member is disposed on the current collector in the secondary battery according to one embodiment of the present disclosure, and FIG. 19 is a view illustrating a part of a state where the cap assembly is coupled to the electrode assembly in the secondary battery according to one embodiment of the present disclosure.

As illustrated in FIG. 12, an electrode assembly is prepared (S1100) in order to manufacture a secondary battery according to one embodiment of the present disclosure. The electrode assembly 1200 includes the electrode portion 1210, the plurality of first electrode tabs 1220 and the plurality of second electrode tabs 1230 formed at one end of the electrode portion 1210, and the plurality of third electrode tabs 1240 and the plurality of fourth electrode tabs 1250 at the other end of the electrode portion. Meanwhile, in the present embodiment, although descriptions are made on the basis of the third electrode tabs 1240 and the fourth electrode tabs 1250, it is obvious that the process can be performed in the same manner for the first electrode tabs 1220 and the second electrode tabs 1230.

When the electrode members forming the electrode portion 1210 are stacked, the third electrode tabs 1240 overlap at the third location, and the fourth electrode tabs 1250 overlap at the fourth location. For example, the third electrode tabs 1240 are grouped at the third location, and the fourth electrode tabs 1250 are grouped at the fourth location. The third location and the fourth location may be spaced apart from each other on the electrode member 1210, and the group of the third electrode tabs 1240 and the group of the fourth electrode tabs 1250 may be spaced apart in the width direction and the length direction of the electrode assembly 1200. As illustrated in FIG. 13, the group of the third electrode tabs 1240 may be arranged at one end of the electrode assembly in the width direction, and the group of the fourth electrode tabs 1250 may be arranged at the other end of the electrode assembly 1200 in the width direction.

Next, the current collector 1300 is arranged at one end of the electrode portion (S1200). In the present embodiment, in order to connect the third and fourth electrode tabs 1240 and 1250 to the current collector 1300, the electrode tabs 1240 and 1250 having the same polarity (anode) are divided into two groups and are welded to the current collector 1300. The plurality of third electrode tabs 1240 and the plurality of fourth electrode tabs 1250 are spaced apart in the width direction and the length direction of the electrode assembly 1200, and no electrode tabs are formed on one side of the plurality of third and fourth electrode tabs 1240 and 1250. The current collector 1300 is disposed on the electrode portion 1210 in a portion where no electrode tabs are formed on one side of the plurality of third electrode tabs 1240 and the plurality of fourth electrode tabs 1250 (FIG. 14A).

Next, each of the third electrode tabs 1240 and the fourth electrode tabs 1250 is bent toward the top surface of the current collector 1300 (S1300). The third electrode tabs 1240 are bent to the top surface of the first current collecting portion 1310 of the current collector 1300, and the fourth electrode tabs 1250 are bent to the top surface of the second current collecting portion 1320 of the current collector 1300. The plurality of third electrode tabs 1240 and the plurality of fourth electrode tabs 1250 are bent in opposite directions (FIG. 14B).

Next, the current collector 1300 and the third and fourth electrode tabs 1240 and 1250 placed on the current collector 1300 are welded (S1400). The third electrode tabs 1240 are welded to the first current collecting portion 1310 of the current collector 1300, and the fourth electrode tabs 1250 are welded to the second current collecting portion 1320 of the current collector 1300. Welding may be performed on the top of the third electrode tabs 1240 and the fourth electrode tabs 1250. For the welding, a method such as ultrasonic welding or laser welding may be used.

As illustrated in FIG. 15, during welding, on the first current collecting portion 1310 of the current collector 1300, welding may be performed from the third electrode tabs 1240 toward the first current collecting portion 1310 side, while on the second current collecting portion 1320 of the current collector 1300, welding may be performed from the fourth electrode tabs 1250 toward the second current collecting portion 1320 side.

When welding is completed, the third and fourth electrode tabs 1240 and 1250 are connected to the current collector 1300 (FIG. 16). Since the electrode tabs 1240 and 1250 are directly welded onto the current collector 1300, the length of the electrode tabs does not need to be long, thereby reducing the cost. Then, the bending spaces of the electrode tabs 1240 and 1250 are not required, thereby further increasing the capacity of the secondary battery.

In the present embodiment, the electrode tabs 1240 and 1250 are directly bent and welded to the current collector 1300, but in another embodiment, the electrode tabs may also be welded to the current collector 1300 after the third electrode tabs 1240 are welded together and the fourth electrode tabs 1250 are welded together in advance.

Meanwhile, as illustrated in FIG. 17, in one embodiment, after the welding of the plurality of electrode tabs 1240 and 1250 is completed, a cover member 1360 may be disposed on the welded portion, for example, the first current collecting portion 1310 and the second current collecting portion 1320. The cover member 1360 may cover at least a part of the electrode assembly 1200 and the current collector 1300.

The cover member 1360 may include an insulating material. The cover member 1360 may be an insulating tape. The current collecting protrusion 1331 and the supporting member 1333 may be exposed without being covered by the cover member 1360. The terminals 1420 and 1420a may be coupled to the current collecting protrusions 1331. By covering the welded portion with the cover member 1360, the insulating structure of the cover plate may be further simplified.

In the present embodiment, the width w1 of the cover member 1360 may be 1 to 1.2 times the width w2 of the first and second electrode tabs. By forming the width w1 of the cover member 1360 to be 1 to 1.2 times the width w2 of the first and second electrode tabs, the area fixed by the cover member 1360 can be minimized while covering the entire welded portion.

When the current collecting protrusion 1331 and the supporting member 1333 are disposed on one side of the current collector 1300, the cover member 1360 may be disposed on the first current collecting portion 1310 and the second current collecting portion 1320 except for the current collecting protrusion 1331 and the supporting member 1333 (FIG. 18). The current collecting protrusion 1331 may be exposed without being covered by the cover member 1360, and then may be coupled to the terminal 1420 and 1420a.

The electrode assembly 1200 to which the current collector 1300 is welded is accommodated in the case 1100, and the cap assembly 1400 seals the opening of the case 1100. Here, as illustrated in FIG. 19, after the current collecting protrusion 1331 is inserted into the through hole of the terminal 1420 of the cap assembly 1400, the outer peripheral surface of the end of the current collecting protrusion 1331 and the inner peripheral surface of the end of the through hole may be welded.

When the welding of the current collectors 1300 is performed on the top of the electrode tabs 1220, 1230, 1240, and 1250, the thickness of the current collector has to be thin in order to transfer heat to the electrode tabs 1220, 1230, 1240, and 1250 on the lower side. This has led to reduction of durability. However, in the present disclosure, since the electrode tabs 1220, 1230, 1240, and 1250 are bent and welded to the current collectors 1300, the thickness of the current collector 1300 may be secured, and the electrode tabs 1220, 1230, 1240, and 1250 may be more efficiently welded to the current collectors 1300.

Also, in the present disclosure, since the electrode tabs having the same polarity are divided into two groups (1220/1230 groups and 1240/1250 groups) and are welded, the electrode tabs 1220, 1230, 1240, and 1250 may be stably welded without any non-welded portion.

In one embodiment, the output of an welding device may also be adjusted according to the location of each of the electrode tabs 1220, 1230, 1240, and 1250 in the welding step.

While the embodiments of the present disclosure have been described, it will be appreciated by one of ordinary skill or knowledge in the art that the embodiments of the present disclosure may be changed or modified in various ways within the scope that does not depart from the technical scope of the various embodiments of the present disclosure defined in the claims attached herein below.

## Claims

1. A secondary battery comprising:
an electrode assembly including an electrode portion, and a plurality of first electrode tabs and a plurality of second electrode tabs formed at one end of the electrode portion; and
a current collector disposed on the top of the electrode portion, and including a first current collecting portion that is welded to the plurality of first electrode tabs, a second current collecting portion that is welded to the plurality of second electrode tabs, and a connection portion that is arranged between the first current collecting portion and the second current collecting portion and includes a current collecting protrusion,
wherein the first electrode tabs is bent toward the first current collecting portion in one direction, and welded, and the second electrode tabs is bent toward the second current collecting portion in a direction opposite to the first electrode tabs and welded.

2. The secondary battery according to claim 1, wherein, in the current collector, the current collecting protrusion is made of a different material from the connection portion.

3. The secondary battery according to claim 1, wherein the current collector further includes a supporting member at the lower end of the current collecting protrusion.

4. The secondary battery according to claim 1, wherein the first current collecting portion extends vertically from the lower side of one side of the connection portion, and the second current collecting portion extends vertically from the upper side of the other side of the connection portion.

5. The secondary battery according to claim 2, wherein
the connection portion of the current collector is made of Cu or Ni,
the current collecting protrusion is made of Al, and
the connection portion and the current collecting protrusion are coupled by cold jointing.

6. The secondary battery according to claim 3, wherein
the connection portion of the current collector is made of Cu or Ni,
the supporting member is made of Al, and
the connection portion and the supporting member are coupled by cold jointing.

7. The secondary battery according to claim 1, wherein the current collector is disposed at one end of the electrode portion, in a portion where the first electrode tabs and the second electrode tabs are not formed.

8. The secondary battery according to claim 1, wherein an insulating member is disposed on the lower surface of the current collector.

9. The secondary battery according to claim 1, wherein the thickness of the current collector is 0.5 mm to 3.0 mm.

10. The secondary battery according to claim 1, wherein a plurality of fine grooves or a plurality of fine irregularities are formed on the top surface of the current collector.

11. The secondary battery according to claim 1, wherein
the electrode portion includes first electrode members on which the first electrode tabs are formed at a first location, and second electrode members on which the second electrode tabs are formed at a second location, and
the first electrode members and the second electrode members have the same polarity.

12. A secondary battery manufacturing method comprising:
a preparation step preparing an electrode assembly including an electrode portion, and a plurality of first electrode tabs and a plurality of second electrode tabs formed at one end of the electrode portion;
a current collector arrangement step disposing a current collector at one end of the electrode portion, in a portion where the first electrode tabs and the second electrode tabs are not formed;
a bending step bending the first electrode tabs toward the top surface of a first current collecting portion of the current collector in one direction, and bending the second electrode tabs toward the top surface of a second current collecting portion of the current collector in a direction opposite to the first electrode tabs; and
a welding step welding the bent first electrode tabs and the bent second electrode tabs to the current collector,
wherein the current collector includes:
a first current collecting portion welded to the first electrode tabs,
a second current collecting portion electrically connected to the first current collecting portion, and welded to the second electrode tabs, and
a connection portion including one end to which the first current collecting portion is connected, the other end to which the second current collecting portion is connected, and a current collecting protrusion.

13. The secondary battery manufacturing method according to claim 12, wherein the current collecting protrusion is made of a different material from the connection portion.

14. The secondary battery manufacturing method according to claim 12, wherein the current collector further includes a supporting member at the lower end of the current collecting protrusion.

15. The secondary battery manufacturing method according to claim 12, wherein, in the current collector, the first current collecting portion extends vertically from the lower side of one side of the connection portion, and the second current collecting portion extends vertically from the upper side of the other side of the connection portion.

16. The secondary battery manufacturing method according to claim 13, wherein
the connection portion is made of Cu or Ni,
the current collecting protrusion is made of Al, and
the connection portion and the current collecting protrusion are coupled by cold jointing.

17. The secondary battery manufacturing method according to claim 14, wherein
the connection portion is made of Cu or Ni,
the supporting member is made of Al, and
the connection portion and the supporting member are coupled by cold jointing.

18. The secondary battery manufacturing method according to claim 12, wherein an insulating member is disposed on the lower surface of the current collector.

19. The second battery manufacturing method according to claim 12, wherein the thickness of the current collector is 0.5 mm to 3.0 mm.

20. The second battery manufacturing method according to claim 12, wherein a plurality of fine grooves or a plurality of fine irregularities are formed on the top surface of the current collector.
